# EUROPÄISCHE PATENTSCHRIFT

(11) **EP 2 611 673 B1**
(45) Veröffentlichungstag und Bekanntmachung des Hinweises auf die Patenterteilung: **06.05.2015**
(21) Anmeldenummer: 11745466.0
(22) Anmeldetag: 26.07.2011
(51) Int. Cl.: B62D 1/185

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 03.09.2010 DE 102010037312
(43) Veröffentlichungstag der Anmeldung: 10.07.2013
(73) Patentinhaber: ThyssenKrupp Presta Aktiengesellschaft, 9492 Eschen (LI)
(72) Erfinder: ALLGÄUER, Rene, A-6844 Altach (AT); FINK, Stefan, A-6830 Rankweil (AT); RAICH, Thomas, A-6773 Vandans (AT)
(74) Vertreter: Fechner, Thomas
(86) Internationale Anmeldenummer: PCT/AT2011/000314
(87) Internationale Veröffentlichungsnummer: WO 2012/027762

(56) Entgegenhaltungen:
- DE-A1- 19 945 164
- FR-A1- 2 674 646
- US-A- 5 199 319

## Beschreibung

Die vorliegende Erfindung betrifft eine Lenksäule für ein Kraftfahrzeug, wobei die Lenksäule eine Manteleinheit, in der eine Lenkspindel drehbar gelagert ist, und ein rohrförmiges, einen Hohlraum umfassendes Tragteil aufweist und die Manteleinheit im Hohlraum des Tragteils angeordnet ist und in zumindest einem Betriebszustand der Lenksäule parallel zu einer Längsachse verschiebbar ist, um welche die Lenkspindel drehbar ist, wobei die Lenksäule als Spielfreistellungseinrichtung zumindest einen keilförmigen Körper und zumindest ein elastisches Vorspannelement aufweist, wobei das elastische Vorspannelement den keilförmigen Körper gegen die Manteleinheit drückt und der keilförmige Körper zur Spielfreistellung zwischen der Manteleinheit und dem Tragteil angeordnet ist, wobei der keilförmige Körper zur Spielfreistellung mit jeweils einer seiner Keilaußenflächen an der Manteleinheit und mit einer anderen seiner Keilaußenflächen am Tragteil anliegt, wobei die Lenksäule eine Feststelleinrichtung zur Arretierung der Manteleinheit aufweist und die Feststelleinrichtung und die Spielfreistellungseinrichtung voneinander separiert sind.

Bei Lenksäulen der genannten Art handelt es sich um eine spezielle Ausgestaltungsform von so genannten verstellbaren Lenksäulen. Sie ermöglichen es, durch Verschieben der Manteleinheit relativ zum Tragteil, die Position des Lenkrades an den Fahrer des Kraftfahrzeuges anzupassen. Darüber hinaus kann die Verschiebbarkeit der Manteleinheit gegebenenfalls auch im Crashfall dazu eingesetzt werden, dass das Lenkrad beim oder vor dem Aufprall des Fahrers verschoben wird, um Verletzungen des Fahrers zu verringern oder zu vermeiden. Damit die Manteleinheit samt Lenkspindel und daran montiertem Lenkrad zwar in der genannten Art und Weise verschiebbar ist, aber trotzdem nicht klappert, sind beim Stand der Technik schon verschiedene Arten von Spielfreistellungseinrichtungen für solche Lenksäulen bekannt geworden, welche das Spiel zwischen Manteleinheit und Tragteil in einer Richtung orthogonal zur Verschieberichtung möglichst auf Null reduzieren sollen. Solche Spielfreistellungseinrichtungen dienen somit dazu, die Manteleinheit spielfrei im Tragteil zu führen.

Aus der US 5,199,319 ist eine Lenksäule bekannt, der dort zur Spielfreistellung verwendete keilförmige Körper sitzt verschiebbar auf einem Bolzen einer Feststelleinrichtung, mit der die Manteleinheit am Tragteil und an der Konsoleneinheit festgeklemmt werden kann, um fixiert zu werden. Es handelt sich somit um eine Lösung, bei der die Spielfreistellungseinrichtung in eine Feststelleinrichtung der Lenksäule integriert ist, wobei die Feststelleinrichtung dazu verwendet wird, in einem geöffneten Zustand eine Verschiebung der Manteleinheit relativ zum Tragteil zu erlauben und in einem Schließzustand die Manteleinheit in ihrer Position zu fixieren. Zur Fixierung der Manteleinheit wird beim Verdrehen des Spannhebels die Manteleinheit unter Verwendung des keilförmigen Körpers mit der Konsoleneinheit verspannt. Gleichzeitig wird die Trageinheit mit der Konsoleneinheit verspannt.

Aus der EP 1 905 665 A2 ist eine Lenksäule bekannt, bei der die Spielfreistellung ebenfalls von der Feststelleinrichtung realisiert wird.

Die in der US 5,199,319 und der EP 1 905 665 A2 realisierte Integration der Spielfreistellungseinrichtung in die Feststelleinrichtung zur Arretierung der Manteleinheit hat den Nachteil, dass die zusätzlichen Elemente die Steifigkeit und Klemmkraft der Feststelleinrichtung reduzieren. Zur Darstellung einer definierten Verschiebekraft im geöffneten Zustand der Feststelleinrichtung und der gleichzeitigen Verspannung des Mantelrohrs mit der Konsoleneinheit und des Tragteils mit der Konsoleneinheit ist eine genaue Abstimmung des Öffnungshubes der Feststelleinrichtung auf die Größe des keilförmigen Körpers und auf die Feder und die weiteren Parameter in der Feststelleinrichtung erforderlich. Das Design der Feststelleinrichtung ist entsprechend sowohl auf die Fixierung als auch auf die Spielfreiheit hin auszulegen. Darüberhinaus erhöhen die zusätzlichen Bauteile die Komplexität und damit den Montageaufwand der Feststelleinrichtung.

Eine Lenksäule der eingangs genannten Art ist in der DE 199 45 164 B1 gezeigt. Die Lenksäule weist eine Spielfreistellungseinrichtung mit einem federbelasteten keilförmigen Passstück und einem zweiten, fest mit dem Tragteil verbundenen keilförmigen Passstück auf.

Aufgabe der Erfindung ist es, eine alternative Lenksäule der eingangs genannten Art bereitzustellen.

Erfindungsgemäß wird dies durch eine Lenksäule gemäß Patentanspruch 1 erreicht.

Es ist somit vorgesehen, dass zwischen dem Tragteil und der Manteleinheit zumindest zwei keilförmige Körper angeordnet sind, welche von dem zumindest einen, vorzugsweise demselben, elastischen Vorspannelement vorgespannt sind.

In anderen Worten ist es denkbar, für jeden dieser keilförmigen Körper ein eigenes elastisches Vorspannelement zur Vorspannung vorzusehen. Bevorzugt ist jedoch im Sinne eines einfachen Aufbaus, wenn zumindest zwei keilförmige Körper von demselben elastischen Vorspannelement vorgespannt sind. Bevorzugte Ausgestaltungsformen der Erfindung sehen vor, dass zwischen dem Tragteil und der Manteleinheit zumindest zwei keilförmige Körper spiegelsymmetrisch zueinander angeordnet sind.

Durch die Separierung der Feststelleinrichtung und der Spielfreistellungseinrichtung ergibt sich eine effektiv wirkende Spielfreistellungseinrichtung, welche in ihrem Aufbau sehr einfach aber zuverlässig und unabhängig von der Feststelleinrichtung zur Arretierung der Manteleinheit ist. Bei erfindungsgemäßen Lenksäulen ist es hierdurch möglich, die dort vorgesehene Spielfreistellungseinrichtung mit beliebigen, beim Stand der Technik an sich bekannten, Feststelleinrichtungen zu kombinieren. Es kann sich um motorbetriebene oder manuell zu betätigende Feststelleinrichtungen handeln. Diese können auf Reib- und/oder Formschluss beruhen. Es kann sich um beliebig ausgeformte Klemmsysteme handeln. Der Begriff "separiert" ist in diesem Zusammenhang dahingehend zu verstehen, dass es sich um eine Lenksäule handelt, bei der die Spielfreistellungseinrichtung nicht in die, wie auch immer ausgebildete, Feststelleinrichtung integriert ist. Entsprechend der bevorzugten Ausführungsform ist der keilförmige Körper außerhalb des direkten Kraftflusses zwischen den Elementen der Feststelleinrichtung untereinander oder zwischen den Elementen der Feststelleinrichtung und der Konsoleneinheit oder der Manteleinheit angeordnet. Es werden folglich keine Kräfte zur Arretierung der Manteleinheit mit Hilfe der Feststelleinrichtung über die keilförmigen Körper übertragen.

Die Spielfreistellung erfolgt bevorzugt in zumindest einer Richtung orthogonal zur Längsachse bzw. Verschieberichtung. Bei der Längsachse handelt es sich um diejenige, gegebenenfalls gedachte Achse, um die die Lenkspindel in der Manteleinheit drehbar gelagert ist.

Bevorzugte Ausgestaltungsformen der Erfindung sehen vor, dass der keilförmige Körper zur Spielfreistellung unmittelbar zwischen der Manteleinheit und dem Tragteil angeordnet ist. In diesen Ausgestaltungsformen wirkt er somit direkt sowohl auf die Manteleinheit als auch auf das Tragteil ein. Besonders günstig ist es in diesem Zusammenhang, wenn der keilförmige Körper zur Spielfreistellung mit jeweils einer seiner Keilaufienflächen an der Manteleinheit und mit einer anderen seiner Keilaußenflächen am Tragteil anliegt.

Durch diese bevorzugte Ausführung ist das elastische Vorspannelement nicht im direkten Kraftfluss zwischen dem Tragteil und der Manteleinheit. Dadurch ist es möglich, mit geringen Federkräften des elastischen Vorspannelementes die gewünschten Anforderungen bezüglich der Spielfreistellung bzw. Spielfreiheit und gleichzeitig eine gute Verschiebbarkeit bei geöffneter Feststelleinrichtung einzuhalten. Durch den keilförmigen Körper wird die elastische Kraft des Vorspannelements verstärkt. Eine solche Spielfreistellungseinrichtung ist im Vergleich zum Stand der Technik auch wesentlich weniger anfällig für Alterungserscheinungen.

Bei erfindungsgemäßen Lenksäulen handelt es sich um sogenannte verstellbare Lenksäulen, bei denen die Manteleinheit samt Lenkspindel in zumindest einem Betriebszustand der Lenksäule zumindest parallel zu der Längsachse, um welche die Lenkspindel drehbar ist, verschoben werden kann. Zusätzlich kann in erfindungsgemäßen Lenksäulen aber auch, wie an sich bekannt, eine Höhenverstellung ermöglicht sein, indem die Manteleinheit gegebenenfalls zusammen mit dem Tragteil auch relativ zu einer karosseriefest zu montierenden Konsoleneinheit verschwenkbär oder anderweitig verstellbar ist. In diesem Fall handelt es sich beim Tragteil um ein in zumindest einem Betriebszustand der Lenksäule schwenkbar an der Konsoleneinheit angebrachtes Zwischenteil. Es kann aber genau so gut vorgesehen sein, dass das Tragteil selbst die Konsoleneinheit zur Befestigung der Lenksäule an dem Kraftfahrzeug ist. Weiters ist es auch denkbar, dass das Tragteil z.B. durch Anschweißen direkt an der Karosserie des Kraftfahrzeugs fixiert ist.

Bevorzugte Ausgestaltungsformen der Erfindung sehen vor, dass das Tragteil eine zumindest bereichsweise zylindermantelförmige, den Hohlraum umgebende Innenkontur aufweist, und eine zumindest bereichsweise zylindermantelförmige Außenkontur der Manteleinheit von der Innenkontur des Tragteils umgeben ist. Die keilförmigen Körper zur Spielfreistellung und/oder das elastische Vorspannelement können z.B. in einer, vorzugsweise nach außen hin offenen, Aufnahmeöffnung des Tragteils angeordnet sein. In diesem Bereich können dann z.B. Abweichungen von der Zylindermantelform in der Innenkontur des Tragteils und/oder in der Außenkontur der Manteleinheit vorhanden sein.

Das elastische Vorspannelement und der oder die keilförmigen Körper können einstückig also als ein integriertes Bauteil, aber auch mehrteilig, also als separate, nur in Wirkverbindung miteinander stehende Teile, ausgeführt sein. Beim elastischen Vorspannelement kann es sich z.B. um eine Feder, vorzugsweise um eine gebogene Blattfeder handeln.

In einer besonders bevorzugten Ausführungsform der Erfindung sind vier keilförmige Körper vorgesehen, von denen jeweils zwei Körper an einer ersten Position entlang der Längsachse der Lenkspindel und jeweils zwei Körper an einer zweiten, von der ersten Position beabstandeten, Position entlang der Längsachse der Lenkspindel angeordnet sind. Auf diese Weise ist die Manteleinheit im Tragteil spielfrei gehalten und kann besonders leicht verschoben werden, ohne dass ein Verkanten oder Verklemmen eintritt. Durch die Anfederung der keilförmigen Körper ist die Anlenkung in vier Punkten nicht überbestimmt und Toleranzschwankungen können gut ausgeglichen werden. Die bevorzugte Ausführung mit keilförmigen Körpern, die getrennt, insbesondere funktional und baulich, von der Feststelleinrichtung angeordnet sind, sichert einen einfachen Aufbau und unabhängige Einstellbarkeit der voneinander separierten Funktionen: Spielfreiheit und Fixierkraft beziehungsweise Fixierung.

Mit Vorteil kann mindestens einer der, am besten alle vorgesehenen, keilförmigen Körper von außen durch eine Öffnung im Tragteil hindurchgeführt sein und mit einem elastischen Vorspannelement durch einen von außen aufgebrachten Halter, der bevorzugt als Clip ausgebildet ist, in Richtung der Manteleinheit vorgespannt angeordnet sein. Derartige Clips sind im einfachsten Fall aus Kunststoff. Aufgrund der Keilform genügen geringe Federkräfte bzw. Vorspannkräfte und entsprechend sind nur geringe Haltekräfte im Clip erforderlich, was die Montage sehr vereinfacht.

Das elastische Vorspannelement, beziehungsweise die Feder, kann insbesondere eine Spiral-Druckfeder, eine Tellerfeder, ein elastischer Blechstreifen oder ein elastischer gebogener Draht sein. Bevorzugt ist die Ausbildung der Feder aus einem elastischen Blechstreifen (Blattfeder), der zwei Schenkel und einen mittleren Bogenbereich aufweist zur Verbindung der beiden Schenkel. Die Schenkel sind in einem Winkel von etwa 20° bis 60° zueinander gebogen. Der Bogenbereich wird in einer Vertiefung oder Aussparung im Clip gehalten und die beiden Schenkel spannen jeweils einen keilförmigen Körper in Richtung der Manteleinheit vor. Mit Vorteil sind im Tragteil Führungen ausgebildet, in denen die keilförmigen Körper geführt sind, wobei auch zusätzliche Schmiertaschen vorgesehen sein können, um ein Verkannten der keilförmigen Körper zu verhindern.

Weitere Merkmale und Einzelheiten bevorzugter Ausgestaltungsformen der Erfindung werden anhand eines beispielhaft ausgewählten und in den Figuren dargestellten Ausführungsbeispiels erläutert. Es zeigen:
Fig. 1 und 2 perspektivische Ansichten auf eine erfindungsgemäß ausgebildete Lenksäule aus verschiedenen Richtungen;
Fig. 3 einen Schnitt, in einer parallel zu einer Wirkrichtung des elastischen Vorspannelementes angeordneten Schnittebene gesehen;
Fig. 4 eine Detaildarstellung des in diesem Ausführungsbeispiel verwendeten keilförmigen Körpers
Fig. 5 eine Explosionsdarstellung zu diesem erfindungsgemäßen Ausführungsbeispiel und
Fig. 6 einen Schnitt durch eine alternative Ausführungsform der Erfindung, in einer parallel zu einer Wirkrichtung des elastischen Vorspannelementes angeordneten Schnittebene gesehen.

Gleichartige oder gleich wirkende Elemente werden in den Figuren mit denselben Bezugszeichen bezeichnet.

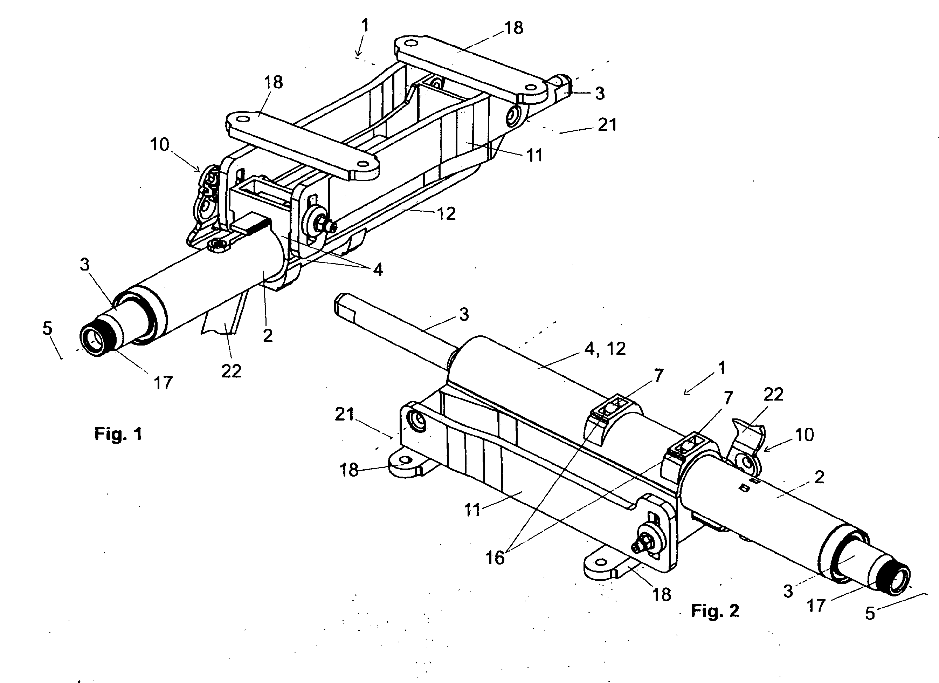

In Fig. 1 ist das erfindungsgemäße Ausführungsbeispiel einer Lenksäule 1 zumindest ungefähr in einer Lage dargestellt, in der diese Lenksäule 1 auch in einem Kraftfahrzeug montiert werden könnte. Zur Befestigung der Lenksäule 1 im Fahrzeug ist die Konsoleneinheit 11 vorgesehen. Sie weist Befestigungslaschen 18 auf, mit denen die Lenksäule 1 an der Karosserie des Fahrzeugs befestigt werden kann. An dieser Konsoleneinheit ist in diesem Ausführungsbeispiel, um die Schwenkachse 21 schwenkbar, das Zwischenteil 12 angeordnet, welches in diesem Ausführungsbeispiel das Tragteil 4 bildet. Durch ein Verschwenken des Zwischen- bzw. Tragteils 4, 12 relativ zu Konsoleneinheit 11, ist, wie an sich bekannt, eine Höhenverstellung möglich, wenn die hier nur schematisiert dargestellte Feststelleinrichtung 10 in ihrem geöffneten Zustand ist. In diesem geöffneten Zustand ist auch ein Verschieben der Mänteleinheit 2 und damit der Lenkspindel 3 in Richtungen parallel zur Längsachse 5 relativ zum Trag- bzw. Zwischenteil 4, 12 und damit eine Längeneinstellung der Lenksäule 1 möglich. Die Lenkspindel 3 ist um die Längsachse 5 drehbar in der Manteleinheit 2 gelagert. Am Lenkradanschluss 17 kann das hier nicht dargestellte Lenkrad an der Lenkspindel 3 montiert werden. Bringt man, wie an sich bekannt, die Feststelleinrichtung 10 in ihren geschlossenen Zustand, so sind Tragteil 4, Manteleinheit 2 und damit auch Lenkspindel 3 zumindest im Normalbetrieb des Kraftfahrzeugs in ihrer Position relativ zur Konsoleneinheit 11 und damit auch zum Fahrzeug festgelegt. Ein Verstellen ist dann, zumindest abgesehen vom Crashfall, weder in Längsrichtung parallel zur Längsachse 5 noch in Höhenrichtung orthogonal dazu möglich. Der Betriebszustand, in dem die Manteleinheit 2 in Richtung parallel zur Längsachse 5 relativ zum Tragteil verschiebbar ist, kann somit z.B. erreicht werden, indem man die Feststelleinrichtung 10, wie an sich bekannt, in ihrem geöffneten Zustand bringt. Die Feststelleinrichtung 10 kann motorisch, aber auch, wie hier angedeutet, mittels eines von Hand schwenkbaren Hebels 22 zwischen dem geöffneten und geschlossenen Zustand verstellt werden.

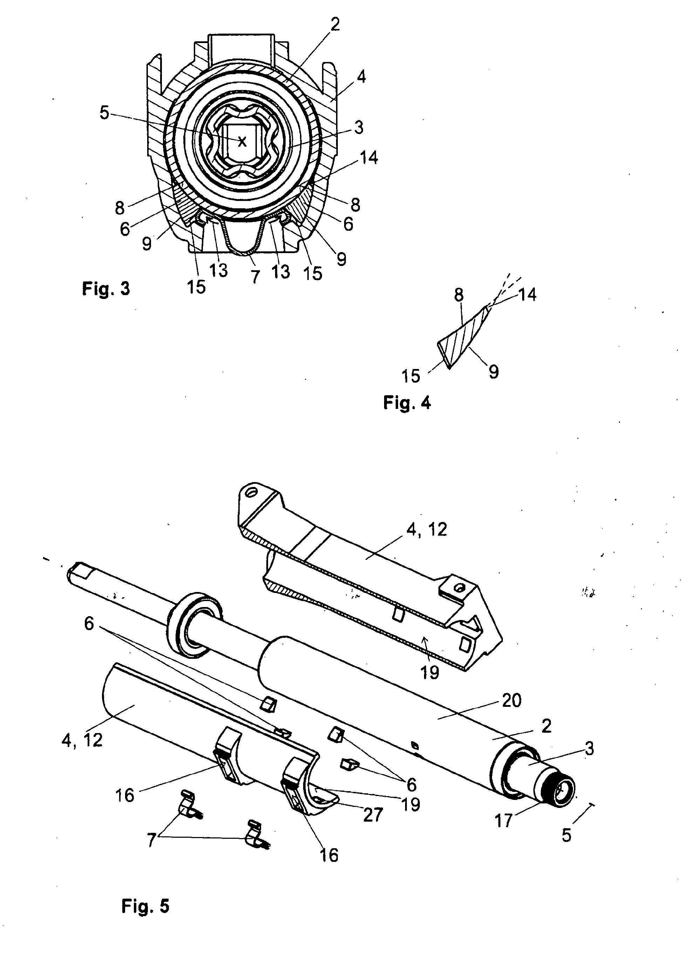

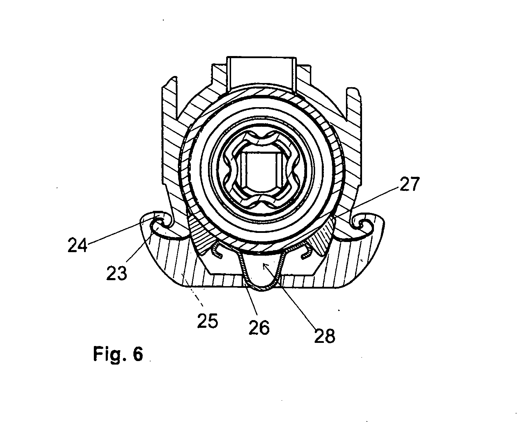

In Fig. 2 ist die Lenksäule 1 aus Fig. 1 in einem umgedrehten Zustand dargestellt, sodass man auf die Unterseite des Tragteils 4 schaut. Dort sind auch die Aufnahmeöffnungen 16 zu sehen, in denen jeweils ein elastisches Vorspannelement 7 und jeweils zwei keilförmige Körper 6 angeordnet sind, wie dies besonders gut aus der im Anschluss geschilderten Fig. 3 und Fig. 6 ersichtlich ist. Festzuhalten ist jedenfalls noch einmal, dass, wie anhand dieses Ausführungsbeispiels erläutert, die mittels der keilförmigen Körper 6 und der elastischen Vorspannelemente 7 ausgebildete Spielfreistellungseinrichtung nicht in die Feststelleinrichtung 10 integriert, sondern von dieser separiert ausgebildet ist. Hierzu ist eben vorgesehen, dass die keilförmigen Körper 6 zur Spielfreistellung zwischen der Manteleinheit 2 und dem Tragteil 4 angeordnet sind, wie dies besonders gut in Fig. 3 und Fig. 6 zu sehen ist.

Fig. 3 zeigt einen Querschnitt, wobei die Schnittebene parallel zur Wirkrichtung des elastischen Vorspannelementes 7 angeordnet ist. Die in Fig. 3 gewählte Schnittebene steht somit auch normal auf der Längsachse 5, um die die Lenkspindel 3 drehbar ist. In Fig. 3 sieht man besonders gut, dass die Manteleinheit 2 in einem entsprechenden Hohlraum des Tragteils 4 angeordnet ist. Das Tragteil 4 kann, wie hier dargestellt, aus einem einzigen Teil, insbesondere einem Gussteil, bestehen. Es ist jedoch denkbar und möglich, das Tragteil 4 aus zwei oder mehreren Teilschalen darzustellen. Eine derartige Zweiteiligkeit könnte entlang der in Fig. 5 veranschaulichten Schnittebene ausgebildet sein. Jedenfalls ist vorgesehen, dass die keilförmigen Körper 6 zur Spielfreistellung zwischen der Manteleinheit 2 und dem Tragteil 4 angeordnet sind. In der gezeigten, bevorzugten Ausgestaltungsform liegen sie mit einer ihrer Keilaußenflächen 8 an der Manteleinheit 2 und mit einer anderen ihrer Keilaußenflächen 9 am Tragteil 4 an. Das in Form einer gebogenen Blattfeder ausgebildete elastische Vorspannelement 7 drückt jeweils in Wirkrichtung 13 auf die vom kleinsten Winkel 14 abgewandte Seite 15 eines der keilförmigen Körper 6. Die keilförmigen Körper 6 werden dadurch in diese Richtung gedrückt, womit die gewünschte Spielfreistellung erreicht wird. Der in Fig. 4 dargestellte kleinste Winkel 14, in dessen Richtung sozusagen die, wenn auch abgeflachte Spitze, des keilförmigen Körpers 6 zeigt, ist somit günstigerweise vom elastischen Vorspannelement 7 abgewandt angeordnet. Die Seite 15 des keilförmigen Körpers 6, auf die das elastische Vorspannelement 7 drückt, liegt jeweils dem kleinsten Winkel 14 gegenüber. Die Keilaußenflächen 8 und 9, mit denen die keilförmigen Körper 6 jeweils an der Manteleinheit 2 bzw. dem Tragteil 4 anliegen, schließen diesen kleinsten Winkel 14 miteinander ein. Die an der Manteleinheit 2 anliegende Keilaußenfläche 8 ist in ihrer Form an den Bereich der Kontur der Manteleinheit 2 angepasst, an dem sie anliegt. Im gezeigten Ausführungsbeispiel ist darüber hinaus auch die Keilaußenfläche 9 in ihrer Form an den Bereich der Kontur des Tragteils 4, an welchem sie anliegt, angepasst. Dabei ist es denkbar und möglich, wie im Beispiel veranschaulicht, Führungen 27 im Tragteil 4 auszubilden, in denen die keilförmigen Körper 6 geführt sind (vgl. Fig. 5).

In Fig. 4 ist einer der keilförmigen Körper 6 noch einmal herausgezeichnet, um die Seite 15 sowie die Keilaußenflächen 8 und 9 und den kleinsten Winkel 14 besser darzustellen. Der kleinste Winkel 14 ist dabei der kleinste aller Winkel, welche sich zwischen allen jeweils benachbarten Außenseiten des keilförmigen Körpers, hier also der Seite 15 und den Keilaußenflächen 8 und 9 und der der Seite 15 gegenüberliegenden Seite, messen lassen. Auch wenn der Keil 6, wie in diesem Ausführungsbeispiel, keine exakte Spitze aufweist, so handelt es sich bei dem kleinsten Winkel 14 doch um den Winkel, auf den die Keilaußenflächen 8 und 9 spitz zulaufen.

Fig. 5 zeigt noch einmal eine Explosionsdarstellung zu Tragteil 4 sowie Manteleinheit 2 und der darin drehbar gelagerten Lenkspindel 3. Hier ist besonders gut zu sehen, dass das Tragteil 4 zur Aufnahme der Manteleinheit 2 einen Hohlraum aufweist, welcher von der zylinder-mantelförmigen Innenkontur 19 des Tragteils 4 begrenzt ist. Die Manteleinheit 2 weist eine ebenfalls zylindermantelförmige Außenkontur 20 auf, mit der sie im Tragteil 4 gelagert ist. Die keilförmigen Körper 6, wie auch die hier als gebogene Blattfeder ausgebildeten elastischen Vorspannelemente 7 sind in von außen zugänglichen Aufnahmeöffnungen 16 im Tragteil 4 gelagert. Im Beispiel ist das Tragteil 4 entlang der schraffierten Fläche aufgeschnitten. Denkbar und möglich wäre es, das Tragteil aus separaten Bauteilen zu bilden, die an dieser Ebene miteinander verbunden werden.

Fig. 6 zeigt eine alternative Ausführungsform der Erfindung. Abweichend von der Ausführung entsprechend der Fig. 3 werden die keilförmigen Körper 6 mit einem Clip 25 befestigt und vorgespannt, wobei der Clip 25 nach Montage im Sinne der Erfindung als Bestandteil des Tragteils 4 aufgefasst werden kann. Das als Blattfeder ausgebildete elastische Vorspannelement 7 stützt sich in der Aussparung 26 des Clips 25 ab. Zur Montage werden mit Vorteil die keilförmigen Körper 6 von außen durch eine Öffnung 28 im Tragteil 4 hindurchgeführt und in die Führungen 27 eingelegt. Separat wird die Feder 7 in die Aussparung 26 des Clips 25 eingelegt. Der Clip wird von außen mit seinen Rastelementen 24 über die Rastnasen 23 geschoben und verrastet (stark schematisiert in Fig. 6 dargestellt), wodurch die Feder 7 die keilförmigen Körper in Richtung der Manteleinheit vorspannt. Derartige Clips 25 sind im einfachsten Fall aus Kunststoff. Aufgrund der Keilform genügen geringe Federkräfte und entsprechend sind nur geringe Haltekräfte im Clip erforderlich, was die Montage sehr vereinfacht.

Alternativ ist es auch denkbar und möglich, die keilförmigen Körper 6 mit einer Schraube oder einem Stift unter Zwischenschaltung eines elastischen Elements, wie beispielsweise einer Feder, vorzuspannen. Dadurch kann bei der Montage das Spiel oder die Verschiebekraft zwischen Manteleinheit 2 und Tragteil 4 eingestellt werden.

Entsprechend den Beispielen sind die keilförmigen Körper 6 etwa in einer Ebene, die parallel zur Längsachse 5 verläuft angeordnet. Es ist weiter denkbar und möglich Gruppen von keilförmigen Körpern 6 auf unterschiedlichen Ebenen, insbesondere auf zwei Ebenen, die einander gegenüberliegend zur Längsachse 5 der Lenkspindel angeordnet sind, anzuordnen. Es können entsprechend insbesondere vier, sechs oder acht keilförmige Körper 6 vorgesehen sein.

Der bzw. die keilförmigen Körper 6 können aus einem Sinterwerkstoff bestehen, dessen Poren bevorzugt mit Schmierstoff gefüllt bzw. getränkt sind. Weiters ist es denkbar und möglich, die keilförmigen Körper 6 aus Kunststoff, beispielsweise PTFE oder POM, auszubilden. Andere bekannte Werkstoffe sind auch anwendbar. Die Oberfläche des keilförmigen Körpers kann mit einer reibungsvermindernden Beschichtung versehen sein, beispielsweise mit Gleitlack.

### Legende zu den Hinweisziffern:

- 1: Lenksäule
- 2: Manteleinheit
- 3: Lenkspindel
- 4: Tragteil
- 5: Längsachse
- 6: keilförmiger Körper
- 7: elastisches Vorspannelement
- 8: Keilaußenfläche
- 9: Keilaußenfläche
- 10: Feststelleinrichtung
- 11: Konsoleneinheit
- 12: Zwischenteil
- 13: Wirkrichtung
- 14: kleinster Winkel
- 15: Seite
- 16: Aufnahmeöffnung
- 17: Lenkradanschluss
- 18: Befestigungslaschen
- 19: Innenkontur
- 20: Außenkontur
- 21: Schwenkachse
- 22: Hebel
- 23: Rastnase
- 24: Rastelement
- 25: Clip
- 26: Aussparung
- 27: Führung
- 28: Öffnung

## Patentansprüche

1. Lenksäule (1) für ein Kraftfahrzeug, wobei die Lenksäule (1) eine Manteleinheit (2), in der eine Lenkspindel (3) drehbar gelagert ist, und ein rohrförmiges, einen Hohlraum umfassendes Tragteil (4) aufweist und die Manteleinheit (2) im Hohlraum des Tragteils (4) angeordnet ist und in zumindest einem Betriebszustand der Lenksäule (1) parallel zu einer Längsachse (5) verschiebbar ist, um welche die Lenkspindel (3) drehbar ist, wobei die Lenksäule (1) als Spielfreistellungseinrichtung zumindest einen keilförmigen Körper (6) und zumindest ein elastisches Vorspannelement (7) aufweist, wobei das elastische Vorspannelement (7) den keilförmigen Körper (6) gegen die Manteleinheit (2) drückt und der keilförmige Körper (6) zur Spielfreistellung zwischen der Manteleinheit (2) und dem Tragteil (4) angeordnet ist, wobei der keilförmige Körper (6) zur Spielfreistellung mit jeweils einer seiner Keilaußenflächen (8) an der Manteleinheit (2) und mit einer anderen seiner Keilaußenflächen (9) am Tragteil (4) anliegt, wobei die Lenksäule (1) eine Feststelleinrichtung (10) zur Arretierung der Manteleinheit (2) aufweist und die Feststelleinrichtung (10) und die Spielfreistellungseinrichtung voneinander separiert sind, **dadurch gekennzeichnet, dass** zwischen dem Tragteil (4) und der Manteleinheit (2) zumindest zwei keilförmige Körper (6) angeordnet sind, welche von dem zumindest einen, vorzugsweise demselben, elastischen Vorspannelement (7) vorgespannt sind.

2. Lenksäule (1) nach Anspruch 1, **dadurch gekennzeichnet, dass** das Tragteil (4) eine zumindest bereichsweise zylindermantelförmige, den Hohlraum umgebende Innenkontur (19) aufweist und eine zumindest bereichsweise zylindermantelförmige Außenkontur (20) der Manteleinheit (2) von der Innenkontur (19) des Tragteils (4) umgeben ist und/oder dass das Tragteil (4) eine Konsoleneinheit (11) zur Befestigung der Lenksäule (1) an dem Kraftfahrzeug oder ein, in zumindest einem Betriebszustand der Lenksäule (1), schwenkbar an der Konsoleneinheit (11) angebrachtes Zwischenteil (12) ist.

3. Lenksäule (1) nach Anspruch 1 oder 2, **dadurch gekennzeichnet, dass** zwei Keilaußenflächen (8, 9) des keilförmigen Körpers (6), in einer parallel zu einer Wirkrichtung (13) des elastischen Vorspannelementes (7) angeordneten Schnittebene gesehen, einen kleinsten Winkel (14) einschließen und dieser kleinste Winkel (14) vom elastischen Vorspannelement (7) abgewandt angeordnet ist.

4. Lenksäule (1) nach einem der Ansprüche 1 bis 3, **dadurch gekennzeichnet, dass** zwei Keilaußenflächen (8, 9) des keilförmigen Körpers (6), in einer parallel zu einer Wirkrichtung (13) des elastischen Vorspannelementes (7) angeordneten Schnittebene gesehen, einen kleinsten Winkel (14) einschließen und das elastische Vorspannelement (7) auf eine Seite (15) des keilförmigen Körpers (6) drückt, welche diesem kleinsten Winkel (14) gegenüberliegt.

5. Lenksäule (1) nach einem der Ansprüche 1 bis 4, **dadurch gekennzeichnet, dass** zwei Keilaußenflächen (8, 9) des keilförmigen Körpers (6), in einer parallel zu einer Wirkrichtung (13) des elastischen Vorspanhelementes (7) angeordneten Schnittebene gesehen, einen kleinsten Winkel (14) einschließen und die eine der Keilaußenflächen (9) am Tragteil (4) und die andere der Keilaußenflächen (8) an der Manteleinheit (2) anliegt.

6. Lenksäule (1) nach Anspruch 5, **dadurch gekennzeichnet, dass** die am Tragteil (4) anliegende Keilaußenfläche (9) in ihrer Form an den Bereich der Kontur des Tragteils (4), an dem sie anliegt, angepasst ist und/oder die an der Manteleinheit (2) anliegende Keilaußenfläche (8) in ihrer Form an den Bereich der Kontur der Manteleinheit (2), an dem sie anliegt, angepasst ist.

7. Lenksäule (1) nach einem der Ansprüche 1 bis 6, **dadurch gekennzeichnet, dass** die zumindest zwei keilförmigen Körper (6) spiegelsymmetrisch zueinander angeordnet sind.

8. Lenksäule (1) nach einem der Ansprüche 1 bis 7, **dadurch gekennzeichnet, dass** das elastische Vorspannelement (7) als Feder, vorzugsweise als gebogene Blattfeder, ausgebildet ist und/oder in einer nach außen hin offenen Aufnahmeöffnung (16) des Tragteils (4) angeordnet ist.

## Claims

1. A steering column (1) for a motor vehicle, wherein the steering column (1) has a jacket unit (2), in which a steering spindle (3) is rotatably mounted, and a tubular support part (4), comprising a cavity, and the jacket unit (2) is arranged in the cavity of the support part (4) and in at least one operating state of the steering column (1) is displaceable parallel to a longitudinal axis (5) about which the steering spindle (1) Is rotatable, wherein the steering column (1) has at least one wedge-shaped body (6) and at least one resilient pretensioning element (7) as a play elimination device, wherein the resilient pretensioning element (7) presses the wedge-shaped body (6) against the jacket unit (2) and for play elimination the wedge-shaped body (6) is arranged between the jacket unit (2) and the support part (4), wherein for play elimination, the wedge-shaped body (6) rests against the jacket unit (2) with one of its wedge external surfaces (8) and against the support part (4) with another of its wedge external surfaces (9) respectively, wherein the steering column (1) has a securing device (10) to lock the jacket unit (2) and the securing device (10) and the play elimination device are separated from one another, **characterized in that** at least two wedge-shaped bodies (6) are arranged between the support part (4) and the jacket unit (2), which bodies are pretensioned by the at least one, preferably the same, resilient pretensioning element (7).

2. A steering column (1) according to claim 1, **characterized in that** the support part (4) has an inner contour (19), which surrounds the cavity and at least regions of which are cylinder-jacket-shaped, and an outer contour (20), at least regions of which are cylinder-jacket-shaped, of the jacket unit (2) is surrounded by the inner contour (19) of the support part (4), and/or **in that** the support part (4) is a bracket unit (11) to secure the steering column (1) to the motor vehicle or is an intermediate part (12) pivotably attached to the bracket unit (11) in at least one operating state of the steering column (1).

3. A steering column (1) according to claim 1 or 2, **characterized in that** viewed in a cutting plane arranged parallel to an active direction (13) of the resilient pretensioning element (7), two wedge external surfaces (8, 9) of the wedge-shaped body (6) enclose a smallest angle (14), and this smallest angle (14) is arranged remote from the resilient pretensioning element (7).

4. A steering column (1) according to any one of claims 1 to 3, **characterized in that** viewed in a cutting plane arranged parallel to an active direction (13) of the resilient pretensioning element (7), two wedge external surfaces (8, 9) of the wedge-shaped body (6) enclose a smallest angle (14), and the resilient pretensioning element (7) presses on a side (15) of the wedge-shaped body (6), which is opposite this smallest angle (14).

5. A steering column (1) according to any one of claims 1 to 4, **characterized in that** viewed in a cutting plane arranged parallel to an active direction (13) of the resilient pretensioning element (7), two wedge external surfaces (8, 9) of the wedge-shaped body (6) enclose a smallest angle (14), and one of the wedge external surfaces (9) rests against the support part (4) and the other of the wedge external surfaces (8) rests against the jacket unit (2).

6. A steering column (1) according to claim 5, **characterized in that** the wedge external surface (9) resting against the support part (4) is adapted in form to the region of the contour of the support part (4) against which it rests and/or the wedge external surface (8) resting against the jacket unit (2) is adapted in form to the region of the contour of the jacket unit (2) against which it rests.

7. A steering column (1) according to any one of claims 1 to 6, **characterized in that** the at least two wedge-shaped bodies (6) are arranged mirror symmetrical to one another.

8. A steering column (1) according to any one of claims 1 to 7, **characterized in that** the resilient pretensioning element (7) is in the form of a spring, preferably a bent leaf spring, and/or is arranged in an outwards open receiving opening (16) of the support part (4).

## Revendications

1. Colonne de direction (1) pour un véhicule automobile, la colonne de direction (1) présentant une chemise (2), dans laquelle une broche de direction (3) est logée de manière à pouvoir tourner, et une pièce support (4) tubulaire comprenant une cavité, et la chemise (2) étant disposée dans la cavité de la pièce support (4) et pouvant se déplacer parallèlement à un axe longitudinal (5) dans au moins un état de fonctionnement de la colonne de direction (1), axe autour duquel la broche de direction (3) peut tourner, la colonne de direction (1) présentant, comme dispositif de positionnement sans jeu, au moins un corps cunéiforme (6) et au moins un élément élastique de précontrainte (7), l'élément élastique de précontrainte (7) pressant le corps cunéiforme (6) contre la chemise (2) et le corps cunéiforme (6) pour le positionnement sans jeu est disposé entre la chemise (2) et la pièce support (4), le corps cunéiforme (6) destiné au positionnement sans jeu plaquant contre la chemise (2) avec l'une de ses faces extérieures cunéiformes (8) et contre la pièce support (4) avec une autre face extérieure cunéiforme (9), la colonne de direction (1) présentant un dispositif d'immobilisation (10) pour arrêter la chemise (2) et le dispositif d'immobilisation (10) étant séparé du dispositif de positionnement sans jeu, **caractérisé en ce qu'**entre la pièce support (4) et la chemise (2) sont disposés au moins deux corps cunéiformes (6), lesquels sont précontraints par au moins un, de préférence, le même élément élastique de précontrainte (7).

2. Colonne de direction (1) selon la revendication 1, **caractérisée en ce que** la pièce support (4) présente un contour intérieur (19) au moins par endroits en forme de chemise cylindrique et entourant la cavité, et un contour extérieur (20), au moins par endroits en forme de chemise cylindrique, de la chemise (2) est entouré par le contour intérieur (19) de la pièce support (4) et/ou **en ce que** la pièce support (4) est une console (11) destinée à fixer la colonne de direction (1) sur le véhicule automobile ou une pièce intermédiaire (12) placée sur la console (11) de manière à pouvoir pivoter dans au moins un état de fonctionnement de la colonne de direction (1).

3. Colonne de direction (1) selon la revendication 1 ou la revendication 2, **caractérisée en ce que** deux faces extérieures cunéiformes (8, 9) du corps cunéiforme (6) forment un très petit angle (14) vu sur un plan de coupe parallèle à un sens de fonctionnement (13) de l'élément élastique de précontrainte (7) et ce très petit angle (14) est disposé à l'opposé de l'élément élastique de précontrainte (7).

4. Colonne de direction (1) selon l'une quelconque des revendications 1 à 3, **caractérisée en ce que** deux faces extérieures cunéiformes (8, 9) du corps cunéiforme (6) forment un très petit angle (14) vu sur un plan de coupe parallèle à un sens de fonctionnement (13) de l'élément élastique de précontrainte (7) et l'élément élastique de précontrainte (7) appuie sur un côté (15) du corps cunéiforme (6) disposé en face de ce très petit angle (14).

5. Colonne de direction (1) selon l'une quelconque des revendications 1 à 4, **caractérisée en ce que** deux faces extérieures cunéiformes (8, 9) du corps cunéiforme (6) forment un très petit angle (14) vu sur un plan de coupe parallèle à un sens de fonctionnement (13) de l'élément élastique de précontrainte (7) et **en ce que** l'une des faces extérieures cunéiformes (9) plaque contre la pièce support (4) et l'autre face extérieure cunéiforme (8) contre la chemise (2).

6. Colonne de direction (1) selon la revendication 5, **caractérisé en ce que** la forme de la face extérieure cunéiforme (9) plaquant contre la pièce support (4) est adaptée à la zone du contour de la pièce support (4) contre laquelle elle plaque et/ou la forme de la face extérieure cunéiforme (8), qui plaque contre la chemise (2), est adaptée à la zone du contour de la chemise (2) contre laquelle elle plaque.

7. Colonne de direction (1) selon l'une quelconque des revendications 1 à 6, **caractérisée en ce qu'**au moins les deux corps cunéiformes (6) sont disposés en symétrie miroir l'un par rapport à l'autre.

8. Colonne de direction (1) selon l'une quelconque des revendications 1 à 7, **caractérisée en ce que** l'élément élastique de précontrainte (7) est conçu comme un ressort, de préférence un ressort à lame courbe et/ou est disposé dans une ouverture de logement (16), ouverte vers l'extérieur, de la pièce support (4).
